(19) Europäisches Patentamt
European Patent Office
Office européen des brevets

(11) EP 0 715 643 B1

(12) EUROPEAN PATENT SPECIFICATION

(45) Date of publication and mention
of the grant of the patent:
**28.01.1998 Bulletin 1998/05**

(51) Int Cl.$^6$: **C08L 101/00**, C08L 75/04,
C08K 7/02, C08K 7/06,
C08K 7/08, C08K 7/14

(21) Application number: **94924030.3**

(22) Date of filing: **26.07.1994**

(86) International application number:
**PCT/US94/08470**

(87) International publication number:
**WO 95/06089 (02.03.1995 Gazette 1995/10)**

(54) **FIBER ADDITIVES TO IMPROVE THE WEAR RESISTANCE OF ELASTOMERIC POLYMER MATRICES**

FASERADDITIVE ZUR VERBESSERUNG DER ABRIEBFESTIGKEIT VON ELASTOMEREN POLYMEREN MATRIZEN

FIBRES AJOUTEES A DES MATRICES POLYMERES ELASTOMERES POUR EN AMELIORER LA RESISTANCE A L'USURE

(84) Designated Contracting States:
**DE FR GB IT**

(30) Priority: **25.08.1993 US 112405**

(43) Date of publication of application:
**12.06.1996 Bulletin 1996/24**

(73) Proprietor: **CATERPILLAR INC.**
**Peoria Illinois 61629-6490 (US)**

(72) Inventors:
• **SINGER, Stephen, M.**
**Peoria, IL 61615 (US)**
• **CARLBERG, James, R.**
**Peoria, IL 61615 (US)**

(74) Representative: **Jackson, Peter Arthur**
**GILL JENNINGS & EVERY**
**Broadgate House**
**7 Eldon Street**
**London EC2M 7LH (GB)**

(56) References cited:
EP-A- 0 225 599       DE-A- 3 310 951
JP-A- 5 059 709       US-A- 4 738 999
US-A- 4 980 516       US-A- 5 112 901

## Description

This invention relates generally to the use of fiber additives in a polymer elastomeric matrix to improve its wear resistance. More particularly, this invention relates to the use of fiber additives in a polyurethane elastomeric composition for forming injection moldable articles which have outstanding wear resistance.

There has been a need for materials which may be added to an elastomeric polymer composition to impart wear inhibiting properties to the polymer without detrimentally reducing its resilience and flexibility.

For example, a polymer composition that combines superior wear resistance with flexibility is useful for making articles such as hydraulic cylinder seals that have excellent wear resistance, low compression set, good thermal stability, good oil resistance and tensile properties. A polymer composition comprising such a wear additive package may either be a thermoset or a thermoplastic. There are some high performance polymers that have a combination of properties such as low compression set, good heat and solvent resistance, high tensile strength and good elasticity. However, there is no known polymer composition which not only has all of the above mentioned properties but in addition, also has excellent wear resistance. For example, fluoroelastomers have good heat and solvent resistance and low compression set. Although fluoroelastomers are often used in high temperature sealing applications, they are expensive and do not have outstanding wear resistance. Hydrogenated nitrile rubbers (HNBR's) exhibit low hysteresis heat build up, have good tensile strength and a low brittle point. However HNBR's are expensive polymers and do not have outstanding wear resistance. Generally, polyurethanes have better wear and abrasion resistance than most other polymers. However, polyurethanes that have better wear resistance usually sacrifice flexibility and low compression set and thus a compromise has to be made between wear resistance, low compression set and cost. Hence, in dynamic sealing applications involving friction, pressure, heat and exposure to harsh solvents and oils, there are no known polymers that offer outstanding performance from a wear resistance and low compression set standpoint at a reasonable cost.

In such tribological applications involving abrasive and adhesive type wear mechanisms, most of the known polymers have to be reinforced with some type of fibers to impart properties that enhance their wear resistance.

Heretofore, fiber materials have been added to polymers in order to increase the structural rigidity of the polymer composite. Further, these fibers have been incorporated in much larger weight percentages, thereby increasing the modulus and structural rigidity of the polymer composite and detrimentally reducing its wear resistance.

U.S.-A-3,898,361, claims the use of ceramic fibers present in 20% to 50% by weight of a fluoroelastomer composite matrix. However, these ceramic particles are added to the polymer to increase the coefficient of friction of the composite and do not serve to enhance the wear resistance of the composite.

A technical article titled "Studies on abrasive wear of carbon fibre (short) reinforced polyamide composites" by U. S. Tewari et al., published in Tribology International, 1992, Vol. 25, pg 53-58, concluded that adding 20% to 40% by weight carbon fibers in nylon 6,6, actually deteriorated the wear resistance of the composite, rather than improving it.

The use of glass fibers in polyurethane compositions is described in U.S.-A-4,254,010. That patent discloses the addition of 20% to 30% by weight aminosilane or epoxysilane coated glass fibers in a thermoplastic polyurethane to make a resin composition suitable for forming rigid articles that resist warpage during molding. US-A-4 254 010 further discloses the addition of relatively large percentages of glass fibers in a polymer matrix to increase the structural rigidity of the polymer matrix.

Heretofore, there has been no known elastomeric polymer composite formulated with a wear inhibiting fiber additive package, that not only has superior wear and compression set properties but is also elastic enough to be used in applications that require flexibility, resilience and wear resistance.

The present invention is directed to overcoming one or more of the problems as set forth above.

JP-A-5059709 discloses a wear resistant elastomeric polymer composition comprising: an elastomeric polymer matrix; and a plurality of fibers dispersed within the elastomeric polymer matrix comprising from 1% to no more than 10% by weight of the elastomeric polymer composition; the elastomeric polymer composition having a wear resistance from 25% to 50% greater than the wear resistance of the elastomeric polymer matrix without the fibers and an ultimate elongation of at least 60% of the ultimate elongation of the elastomeric polymer matrix without the fibers; and according to a first aspect of the present invention, such a composition is characterised in that the fibers are a mixture of glass fibers and ceramic fibers, the glass fibers having a length of from 0.5 mm to 3 mm and a diameter of from 0.01 mm to 0.3 mm; and the ceramic fibres having a length of from 0.05 mm to 3 mm and a diameter of from 0.01 to 0.3 mm.

Preferably the mixture of glass and ceramic fibers are present in a weight ratio of about 50:50.

Preferably the length and diameter of the glass fibers is about 1.5 mm and 0.1 mm respectively and the length and diameter of the ceramic fibers is about 0.14 mm and about 0.025 mm respectively.

According a second aspect of the present invention there is provided a wear resistant polyurethane elastomeric composition comprising: a polyurethane elastomer derived from a saturated hydroxyl terminated polyfunctional polyol, a polyfunctional chain extender, and a polyfunctional isocyanate; and a plurality of fibers dispersed within the polyurethane elastomer, the fibers having a length of from 0.5 mm to 3 mm and a diameter of from 0.01 mm to 0.3 mm, and comprising from 1% to no more than 10% by weight of the polyurethane elastomeric composition; the polyurethane elastomeric composition having a wear resistance of from 25% to 50% greater than the wear resistance of the polyurethane elastomeric composition without the fibers and an ultimate elongation which is at least 60% of the ultimate elongation of the polyurethane elastomeric composition without the fibers.

In the accompanying drawings:

FIG. 1 is a graph illustrating the improved wear characteristics of a fiber incorporated methylene diisocynate (MDI) based thermoplastic polyurethane (TPU) over a non-fiber containing MDI based TPU, according to the present invention;

FIG. 2 is a graph illustrating the improved wear characteristics of a fiber incorporated commercially available MDI based TPU, over a non-fiber containing MDI based TPU, according to the present invention; and,

FIG. 3 is a graph illustrating the improved wear characteristics of a fiber incorporated naphthalene diisocyanate (NDI) based TPU, over a non-fiber containing NDI based TPU, according to the present invention.

In the preferred embodiment of the present invention, a plurality of fibers are incorporated into a polyurethane elastomer matrix, resulting in a polyurethane composite material. Other examples of elastomers that may alternatively be used to incorporate a plurality of fibers into, are fluoroelastomers that are copolymers or terpolymers of vinylidene fluoride, hexafluoropropylene and propylene and combinations thereof, saturated and partially saturated nitrile rubber and hydrogenated nitrile rubber.

In the preferred embodiment of the present invention, the polyurethane elastomer is derived from reacting a saturated hydroxyl terminated polyfunctional polyol, a polyfunctional chain extender and a polyfunctional isocyanate. The saturated hydroxyl terminated polyfunctional polyglycol used is butanediol polyglycol adipate (BPA). The BPA used in carrying out the preferred embodiment has a trade name "Rucoflex Saturated Polyester Diol S-102-110", is manufactured by Ruco Polymer Corporation, and has a molecular weight of 980 gms/mole and a hydroxyl value of 110. The polyfunctional chain extender used is hydroquinone bis 2-hydroxyethyl ether (HQEE). The HQEE used in carrying out the preferred embodiment has a trade name "RC Crosslinker 30/10 tt", is manufactured by Rhein Chemie Corporation and has a hydroxyl value of about 566 and a molecular weight of about 198 gms/mole. The polyfunctional isocyanate used is 1,5 naphthalene diisocyanate (NDI). The NDI used in carrying out the preferred embodiment has a trade name "Desmodur 15", is manufactured by Miles, Inc and has a molecular weight of 210 gms/mole.

In another embodiment of the present invention, the polyurethane elastomer is derived from reacting a mixture of the BPA "Rucoflex Saturated Polyester Diol S-102-110" and HQEE "RC Crosslinker 30/10 tt", with methylene diisocyanate (MDI). The MDI used in carrying out an embodiment of the present invention has a trade name "PAPI 9094", is manufactured by Dow Chemical Co., and has a molecular weight of 250 gms/mole.

In still another embodiment of the present invention, the polyurethane elastomer used is a commercially available TPU called Texin 345D, a trade name of Miles, Inc.

The plurality of fibers dispersed in the polyurethane elastomer are a mixture of glass fibers and ceramic fibers. These fibers advantageously impart excellent wear resistance to the polyurethane composite and yet substantially maintain the ultimate elongation property of the composite. Further, these fibers do not detrimentally affect any of the processing properties of the polyurethane composite, keeping it suitable for injection molding. Furthermore, these fibers do not disadvantageously decrease the elasticity or resilience of the polyurethane, maintaining its suitability for use as a seal material.

The glass fibers have a length from 0.5 mm to 3 mm, a diameter from 0.01 mm to 0.3 mm, and a length to diameter ratio (L/D ratio for short) from 10 to 20. The glass fibers preferably have a length of from 1 mm to 2 mm, a diameter of from 0.1 mm to 0.2 mm, and a L/D ratio of about 15. The ceramic fibers desirably have a length of from 0.05 mm to 0.5 mm, a diameter of from 0.01 mm to 0.05 mm, and a L/D ratio of from 2 to 15. The ceramic fibers preferably have a length of from 0.05 mm to 0.3 mm, a diameter of from 0.015 mm to 0.03 mm, and a L/D ratio of about 6. Other examples of fibers that can be used in combination with glass and ceramic fibers are carbon fibers and aramid fibers. However, it has been found that only the combination of glass and ceramic fibers produces the desirable features such as increased wear and compression set resistance and substantial retention of elasticity. The glass fibers used in carrying out the preferred embodiment of making the thermoplastic polyurethane elastomer composition have a trade name "Fiberglas 737 BD", are manufactured by Owens Corning Fiber Glass Corp., and have an average fiber length of 1.5 mm, a mean diameter of 0.1 mm, and a mean L/D ratio of about 15. The ceramic fibers used in carrying out the preferred embodiment of making the thermoplastic polyurethane elastomer composition have a trade name "Fiberfrax EF 119", are manufactured by Carborundum Co., and have an average fiber length of 0.14 mm, a mean diameter of 0.025 mm, and a mean L/D ratio of about 6.

In the preferred embodiment of the present invention, the glass and ceramic fiber incorporated polyurethane elastomeric composition is derived from the reactants having the following composition comprising, by weight percent:

| BPA | 60.0 |
| HQEE | 10.0 |
| NDI | 26.2 |
| Glass fibers | 1.9 |
| Ceramic fibers | 1.9 |

Further, as shown by the following Examples, the polyurethane elastomeric composition embodying the present invention has dramatically improved wear resistance at substantially the same ultimate tensile strength, ultimate elongation and hardness.

The surface hardness of all the Examples described below was measured according to ASTM Test Method D 2240 (Shore D), Standard Test Method for Rubber Property, Durometer Hardness.

The tensile properties of all the Examples described below were measured according to ASTM Test Method D 412 (Test Method A), Standard Test Methods for Rubber Properties in Tension, at a strain rate of 20 inches per minute.

The wear characteristics of the Examples described below were determined by two tests, the Variable Load Wear Test and the Mudbox Torsional Test, both of which have been developed by Caterpillar Inc.

The Variable Load Wear Test was conducted according to the procedure developed by Caterpillar Inc., which includes the following steps:

1. A plaque, having a selected composition and a thickness of 3 mm, is injection molded.
2. Out of this plaque, test samples are die cut, each test sample shaped like a flat annular disk having an inside diameter of 42 mm, an outside diameter of 60 mm and a thickness of 3 mm.
3. The test sample is rigidly attached to a circular steel backing plate and mounted on a spindle capable of rotation at varying speeds.
4. A layer of SAE grade 80W90 oil is applied to the test sample surface.
5. The test sample is brought into contact concentrically with an annular wear plate having an inside diameter of 52.7 mm, an outside diameter of 76.2 mm and a surface roughness of 1.15 microns such that the resultant contact area between the test sample and the wear plate is 645 mm$^2$ (1 in$^2$).
6. The annular wear plate is mounted in a non-rotating fixture which is capable of movement in a direction towards the test sample.
7. A 90.7 kg (200 lb.) load is applied to the fixture, thereby compressing the test sample to the wear plate.
8. The spindle is then rotated at 200 rpm while maintaining the 90.7 kg (200 lb.) load on the test sample.
9. The interface temperature is measured at four locations spaced 90 degrees apart every 50 seconds.
10. At 60 minute intervals, the load applied to the fixture is raised in increments of 45.3 kg (100 lbs.) up to a maximum load of 362.9 kg (800 lbs). If the maximum interface temperature exceeds 120 °C before the maximum load of 362.9 kg (800 lb). can be applied, the test is terminated. At each load, the interface temperature is recorded as per step 9.
11. A graph of average interface temperature is plotted against load for each sample. For a constant load, a lower interface temperature is indicative of wear rate.

The Mudbox Torsional Test was conducted according to the procedure developed by Caterpillar Inc., which includes the following steps:

1. A donut shaped member having an inner diameter of about 75 mm, an outer diameter of about 80 mm and a thickness of about 3 mm, is injection molded from an elastomer sample having a selected composition, defining a test sample.
2. The test sample is rigidly attached to a donut shaped steel backing plate, thereby enabling it to be used as a seal and mounted on a spindle capable of oscillating at ± 15 degrees.
3. The test sample is brought into contact concentrically with an annular wear plate, lubricated with SAE grade 80W90 oil, and having a hardness of about 57 to 62 Rockwell C and a surface roughness of about 0.3 microns such that the entire cross sectional area of the test sample contacts the said wear plate.
4. The annular wear plate is mounted in a non-rotating fixture which is capable of movement in a direction towards the test sample.
5. A load of about 204.1 kg to 249.5 kg (450 to 550 lbs). is applied to the fixture, thereby compressing the test sample to the wear plate.
6. The spindle is then oscillated while maintaining the load on the test sample. A cycle is completed when the test sample oscillates 15 degrees forward, then 30 degrees backwards and finally 15 degrees forward again. One cycle is completed per second.

7. The entire assembly is immersed in a slurry consisting of clay, sand and water and the test is run for 3,000,000 cycles.

8. After 3,000,000 cycles, the test sample is removed and its thickness is measured by using an optical comparator. The % wear loss is calculated as follows;

$$\% \text{ wear loss} = \frac{t_i - t_f}{t_i} \times 100$$

where $t_i$ is the initial thickness and $t_f$ is the final thickness of the test sample.

In the following Example A, sample 1, an embodiment of the present invention, is a MDI based TPU, derived from the reactants comprising of BPA, HQEE and MDI and incorporated with glass and ceramic fibers as per the composition listed in Table 1. Sample 2 is the same as sample 1 but without any fibers. Sample 3, another embodiment of the present invention, is a commercially available MDI based TPU called Texin 345D, a trade name of Miles, Inc., incorporated with glass and ceramic fibers as per the composition shown in Table 1. Sample 4 is the same as sample 3 but without any fibers. These polyurethane samples are compared below with samples 5 and 6.

## EXAMPLE A

In accordance with the present invention, test sample 5, representative of the preferred embodiment of the present invention, was formed by adding glass and ceramic fibers to the reaction mixture of BPA, HQEE and NDI as per the composition shown in Table 1. Test sample 6 is the same as test sample 5, but without any fibers.

TABLE I

| TEST SAMPLES 1-6 | | | | | | |
|---|---|---|---|---|---|---|
| | REACTANT | MOLES | MOLE% | MW gm/mol | WEIGHT gms | WEIGHT% |
| Sample 1 | BPA | 0.45 | 21.3 | 980 | 441.0 | 51.1 |
| | HQEE | 0.55 | 25.9 | 198 | 108.9 | 12.6 |
| | MDI | 1.12 | 52.8 | 250 | 280.0 | 32.5 |
| | GLASS | -- | -- | -- | 16.5 | 1.9 |
| | CERAMIC | -- | -- | -- | 16.5 | 1.9 |
| Sample 2 | BPA | 0.45 | 21.3 | 980 | 441.0 | 53.1 |
| | HQEE | 0.55 | 25.9 | 198 | 108.9 | 13.1 |
| | MDI | 1.12 | 52.8 | 250 | 280.0 | 33.8 |
| Sample 3 | TEXIN 345D | - | -- | -- | 829.9 | 96.2 |
| | GLASS | -- | -- | -- | 16.5 | 1.9 |
| | CERAMIC | -- | -- | -- | 16.5 | 1.9 |
| Sample 4 | TEXIN 345D | - | -- | -- | 829.9 | 100.0 |
| Sample 5 | BPA | 0.55 | 25.9 | 980 | 539.0 | 60.0 |
| | HQEE | 0.45 | 21.3 | 198 | 89.1 | 10.0 |
| | NDI | 1.12 | 52.8 | 210 | 235.2 | 26.2 |
| | GLASS | -- | -- | -- | 17.4 | 1.9 |
| | CERAMIC | -- | -- | -- | 17.4 | 1.9 |
| Sample 6 | BPA | 0.55 | 25.9 | 980 | 539.0 | 62.4 |
| | HQEE | 0.45 | 21.3 | 198 | 89.1 | 10.3 |
| | NDI | 1.12 | 52.8 | 210 | 235.2 | 27.3 |

After forming each of the above described materials (samples 1-6), they were tested in accordance with the previously identified standardized test procedures. The results of the physical property tests are shown in Table II.

TABLE II

| PHYSICAL PROPERTIES | | |
|---|---|---|
| TEST SAMPLES | | |
| PROPERTY | 5 | 6 |
| Hardness,Sh D | 54 | 55 |
| Tensile, psi | 4669 | 5827 |
| % Elongation | 530 | 580 |

It can be seen that sample 5 has about 80% of the tensile strength and about 90% of the ultimate elongation of sample 6.

Each of the six samples were tested for wear resistance by the standardized test procedures as described above. Table III shows the results of the Mudbox Torsional Test for samples 1-6, and the marked influence of the combination of the glass and ceramic fibers, each in a 1.9 weight % respectively in each of the three embodiments of the present invention (samples 1, 3 and 5), in increasing their wear resistance.

TABLE III

| MUDBOX TORSIONAL TEST | | | | | | |
|---|---|---|---|---|---|---|
| TEST SAMPLES | | | | | | |
| PROPERTY | 1 | 2 | 3 | 4 | 5 | 6 |
| % WEAR | 32 | 43 | 30 | 57 | 22 | 34 |

It can be seen that Texin 345D without the fibers (sample 4), exhibits the highest wear loss of 57%. When the same Texin 345D is incorporated with the fibers (sample 3), the wear loss drops dramatically from 57% to 30%, resulting in about 50% improvement in the wear resistance. Similarly, the fiber incorporated MDI based TPU (sample 1), shows about 26% improvement in wear resistance over the non-fiber incorporated MDI-TPU (sample 2). Likewise, the NDI based TPU (sample 5), representative of the preferred embodiment of the present invention, shows a 35% improvement over sample 6. Further, the preferred embodiment also exhibits the lowest wear loss of any sample.

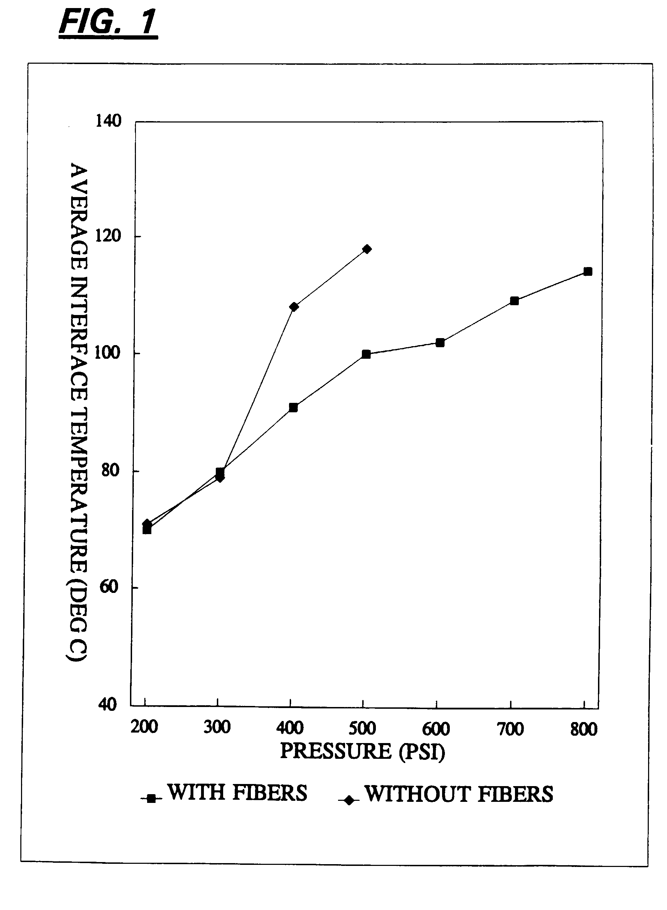

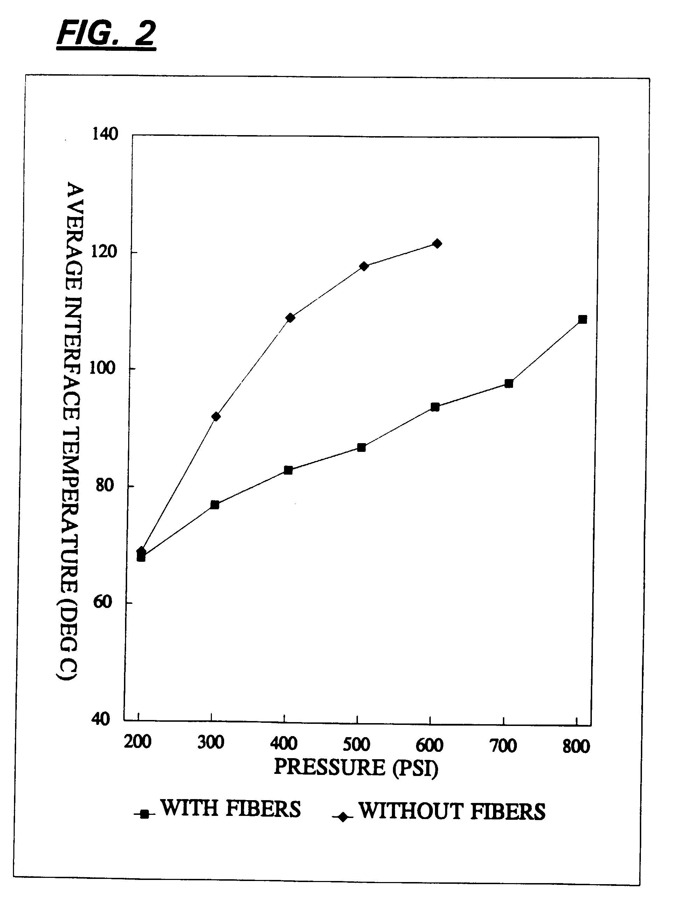

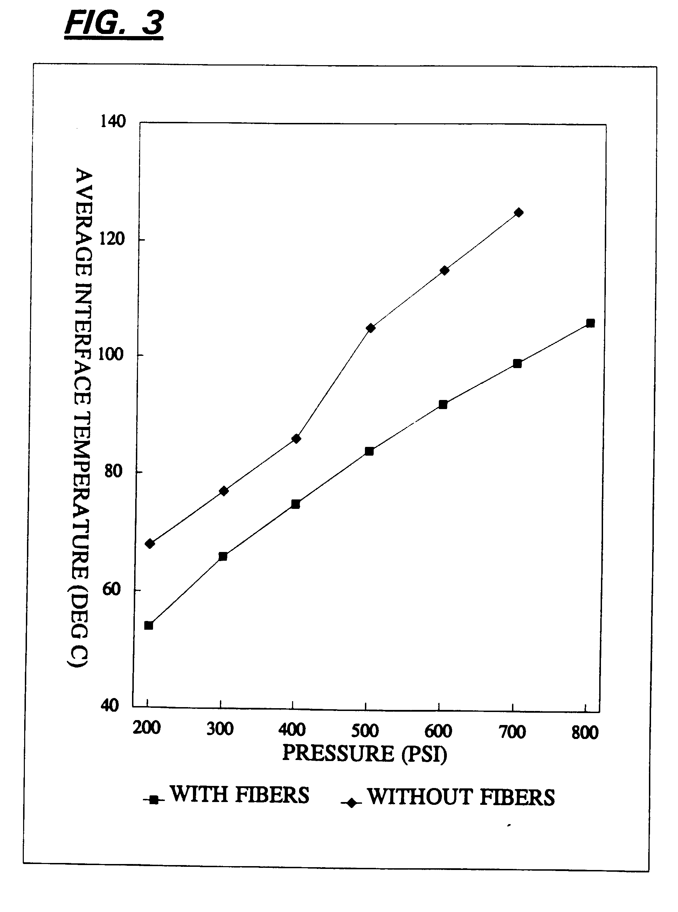

The marked influence of 1.9% glass and 1.9% ceramic fibers in various test samples, and in particular the combined benefit of both glass and ceramic fibers in providing increased wear resistance to a elastomeric matrix is shown below in Table IV and illustrated graphically in FIG. 1, FIG. 2 and FIG. 3.

TABLE IV

| VARIABLE LOAD WEAR TEST - Interface Temp. vs. Load | | | | | | |
|---|---|---|---|---|---|---|
| TEST SAMPLES | | | | | | |
| | 1 | 2 | 3 | 4 | 5 | 6 |
| Load (psi) | Interface temperature (°C) | | | | | |
| 200 | 70 | 71 | 68 | 69 | 54 | 68 |
| 300 | 80 | 79 | 77 | 92 | 66 | 77 |
| 400 | 91 | 108 | 83 | 109 | 75 | 87 |
| 500 | 100 | 118 | 89 | 118 | 84 | 105 |
| 600 | 102 | * | 94 | 122 | 92 | 115 |
| 700 | 109 | * | 98 | * | 99 | 125 |
| 800 | 114 | * | 109 | * | 106 | * |

* the test samples failed at that load and thus the interface temperature could not be recorded.

The graphical representation of the above data in FIG. 1, FIG. 2 and FIG. 3 illustrates the improved wear resistance of test samples 1, 3 and 5, all having a combination of about 1.9 weight % glass and 1.9 weight % ceramic fibers over test samples 2, 4 and 6 which respectively contain no fibers at all, as evidenced by the lower interface temperatures. While it is recognized that the actual wear in the test samples was not measured by any device, it has been found that the temperature at the test sample and wear plate interface correlates very closely to the amount of wear experienced by the sample. It has also been found that determination of the amount of wear by measuring the final thickness of the sample can be misleading in this type of an accelerated wear test. This is so because as the load on the sample is progressively increased, the sample tends to extrude and "flow", especially with a rising interface temperature. Thus a better way to determine the wear resistance is by accurately monitoring the interface temperature. When the interface temperature rises sharply with an incremental increase in the load, it is an indication the sample has failed. For these reasons, it is concluded that sample 5, the preferred embodiment of the present invention has the highest wear resistance of all the test samples.

In the following Example B, the effect of varying the amount of glass fibers and ceramic fibers incorporated in an NDI based TPU, is shown. The NDI based TPU is derived from the same reactants and has the same composition as test sample 6, as shown in the previous example.

## EXAMPLE B

Table V shows the composition of the various test samples 7-13.

TABLE V

| TEST SAMPLES 7-13 | | |
|---|---|---|
| | REACTANT | WEIGHT% |
| Sample 7 | NDI-TPU | 100.0 |
| | Glass Fibers | 0.0 |
| | Ceramic Fibers | 0.0 |
| Sample 8 | NDI-TPU | 96.0 |
| | Glass Fibers | 2.0 |
| | Ceramic Fibers | 2.0 |
| Sample 9 | NDI-TPU | 94.0 |
| | Glass Fibers | 3.0 |
| | Ceramic Fibers | 3.0 |
| Sample 10 | NDI-TPU | 88.0 |
| | Glass Fibers | 6.0 |
| | Ceramic Fibers | 6.0 |
| Sample 11 | NDI-TPU | 94.0 |
| | Glass Fibers | 6.0 |
| | Ceramic Fibers | 0.0 |
| Sample 12 | NDI-TPU | 94.0 |
| | Glass Fibers | 0.0 |
| | Ceramic Fibers | 6.0 |
| Sample 13 | NDI-TPU | 91.0 |
| | Glass Fibers | 3.0 |
| | Ceramic Fibers | 6.0 |

After forming each of the above described materials (samples 7-13), they were tested in accordance with the previously identified standardized test procedures. The results of the physical property tests are shown in Table VI.

TABLE VI

| PHYSICAL PROPERTIES | | | | | | | |
|---|---|---|---|---|---|---|---|
| TEST SAMPLES | | | | | | | |
| PROPERTY | 7 | 8 | 9 | 10 | 11 | 12 | 13 |
| Hardness, Sh D | 56 | 56 | 53 | 56 | 53 | 54 | 56 |
| Tensile, psi | 5827 | 4770 | 4875 | 4148 | 4546 | 4930 | 4243 |
| % Elongation | 580 | 530 | 545 | 470 | 415 | 525 | 465 |

Each of the seven samples were also tested for wear resistance by the standardized test procedures as described above. Table VII shows the results of the Mudbox Torsional Test for samples 7-13.

TABLE VII

| MUDBOX TORSIONAL TEST | | | | | | | |
|---|---|---|---|---|---|---|---|
| TEST SAMPLES | | | | | | | |
| PROPERTY | 7 | 8 | 9 | 10 | 11 | 12 | 13 |
| % WEAR | 34 | 22 | 25 | 32 | 22 | 29 | 26 |

It can be seen that sample 7, which is the NDI based TPU without any fibers incorporated in its matrix, has the highest amount of % wear loss. By incorporating only 2% by weight glass fibers and 2% by weight ceramic fibers into the elastomer matrix (sample 8), the % wear loss decreases dramatically to 22%, resulting in a improved wear resistance of about 35%. However, by gradually increasing the amount of glass and ceramic fibers incorporated in the elastomer matrix up to 6% glass and 6% ceramic, (sample 10), the % wear loss actually increases, thereby reducing the wear resistance of the elastomeric matrix. The effect of a combination of glass and ceramic fibers in improving the wear resistance of the elastomer diminishes as the total amount of fibers increases over 10% by weight. Further, by comparing the physical properties of sample 11 from Table VI with its wear resistance from Table VII, it is seen that merely glass fibers alone do not result in the combined advantage of high wear resistance and high elongation. Likewise, merely ceramic fibers alone do not yield a combination of high wear resistance and high elongation.

## Industrial Applicability

The glass and ceramic fiber reinforced elastomeric composition of the present invention is particularly useful in making hydraulic cylinder shaft seals for applications where the high wear resistance of the elastomeric composite can be exploited to achieve improved seal life. Such applications include sealing rings for hydraulic rams on earth-moving equipment, seals for all types of high pressure greasing equipment, and most high pressure static or reciprocating seals for pneumatic or hydraulic use.

Another example of a successful use of this wear resistant elastomeric composition is for making seals for control valves used in the mining industry. The seals in these type of valves also serve to seal off high pressure bleed valves. As there is a high velocity flow of hydraulic fluid across the sealing surface, these seals can be easily scoured or abraded. The present invention can overcome that problem.

This invention can be useful in a variety of applications where a combination of wear resistance and resilience is crucial. For example, the glass and ceramic fiber additive package may be incorporated into a polyurethane elastomer for making highly wear resistant as well as resilient soles for footwear.

## Claims

1. A wear resistant elastomeric polymer composition comprising: an elastomeric polymer matrix; and a plurality of fibers dispersed within the elastomeric polymer matrix and comprising from 1% to no more than 10% by weight of the elastomeric polymer composition; the elastomeric polymer composition having a wear resistance from 25% to 50% greater than the wear resistance of the elastomeric polymer matrix without the fibers and an ultimate elongation of at least 60% of the ultimate elongation of the elastomeric polymer matrix without the fibers; characterised in that the fibers are a mixture of glass fibers and ceramic fibers, the glass fibers having a length of from 0.5 mm to 3 mm and a diameter of from 0.01 mm to 0.3 mm; and the ceramic fibres having a length of from 0.05 mm to 3 mm and a diameter of from 0.01 to 0.3 mm.

2. A composition according to claim 1, further comprising aramid fibers.

3. A composition according to claim 1 or claim 2, further comprising carbon fibers.

4. A composition according to any one of the preceding claims, wherein the mixture of glass fibers and ceramic fibers is present in a weight ratio of from 25:75 to 75:25 of glass fibers to ceramic fibers.

5. A composition according to claim 4, wherein the glass fibers and the ceramic fibers are present in a weight ratio of about 50:50.

6. A composition according to any one of the preceding claims, wherein the length of the glass fibers is about 1.5 mm and the diameter of the glass fibers is about 0.1 mm.

7. A composition according to claim 2, wherein the ceramic fibers have a length of from 0.05 mm to 0.5 mm; a diameter of from 0.01 mm to 0.05 mm; and a length to diameter ratio of from 2 to 15.

8. A composition according to claim 7, wherein the length of the ceramic fibers is about 0.14 mm and the diameter of the ceramic fibers is about 0.025 mm.

9. A wear resistant polyurethane elastomeric composition comprising: a polyurethane elastomer derived from a saturated hydroxyl terminated polyfunctional polyol, a polyfunctional chain extender, and a polyfunctional isocyanate; and a plurality of fibers dispersed within the polyurethane elastomer, the fibers having a length of from 0.5 mm to 3 mm and a diameter of from 0.01 mm to 0.3 mm, and comprising from 1% to no more than 10% by weight of the polyurethane elastomeric composition; the polyurethane elastomeric composition having a wear resistance of from 25% to 50% greater than the wear resistance of the polyurethane elastomeric composition without the fibers and an ultimate elongation which is at least 60% of the ultimate elongation of the polyurethane elastomeric composition without the fibers.

10. A composition according to claim 9, wherein fibers include at least one of ceramic fibers, glass fibers, aramid fibers and carbon fibers.

11. A composition according to claim 9, wherein the fibers are a mixture of glass fibers and ceramic fibers.

12. A composition according to claim 11, wherein the mixture of glass fibers and ceramic fibers is present in a weight ratio of from 25:75 to 75:25 of glass fibers to ceramic fibers.

13. A composition according to claim 12, wherein the glass fibers and the ceramic fibers are present in a weight ratio of about 50:50.

14. A composition according to any one of claims 10 to 13, wherein the length of the glass fibers is about 1.5 mm and the diameter of the glass fibers is about 0.1 mm.

15. A composition according to any one of claims 10 to 14, wherein the ceramic fibers have a length of from 0.05 mm to 0.5 mm; a diameter of from 0.1 mm to 0.05 mm; and a length to diameter ratio of from 2 to 15.

16. A composition according to claim 15, wherein the length of the ceramic fibers is about 0.14 mm and the diameter of the ceramic fibers is about 0.025 mm.


**Patentansprüche**

1. Eine abriebbeständige Elastomer-Polymerzusammensetzung, eine Elastomer-Polymermatrix und eine Vielzahl von in der Elastomer-Polymermatrix verteilten Fasern von 1 Gew.% bis nicht mehr als 10 Gew.% der Elastomer-Polymerzusammensetzung; wobei die Elastomer-Polymerzusammensetzung einen Abriebwiderstand von 25 % bis 50 % größer als den Abriebwiderstand der Elastomer-Polymermatrix ohne die Fasern besitzt und eine Bruchdehnung (ultimate elongation) von mindestens 60 % der Bruchdehnung der Elastomer-Polymermatrix ohne die Fasern,
dadurch **gekennzeichnet,** daß
die Fasern eine Mischung aus Glasfasern und Keramikfasern sind, wobei die Glasfasern eine Länge von 0,5 mm bis 3 mm und einen Durchmesser von 0,01 mm bis 0,3 mm besitzen, und wobei die Keramikfasern eine Länge von 0,05 mm bis 3 mm und einen Durchmesser von 0,01 mm bis 0,3 mm besitzen.

2. Zusammensetzung nach Anspruch 1, wobei ferner Aramidfasern vorgesehen sind.

3. Zusammensetzung nach Anspruch 1 oder 2, wobei ferner Kohlenstoffasern vorgesehen sind.

4. Zusammensetzung nach einem der vorhergehenden Ansprüche, wobei die Mischung aus Glasfasern und Keramikfasern in einem Gewichtsverhältnis von 25:75 bis 75:25 der Glasfasern zu Kermikfasern vorhanden ist.

**5.** Zusammensetzung nach Anspruch 4, wobei die Glasfasern und die Keramikfasern in einem Gewichtsverhältnis von ungefähr 50:50 vorgesehen sind.

**6.** Zusammensetzung nach einem der vorhergehenden Ansprüche, wobei die Länge der Glasfasern ungefähr 1,5 mm und der Durchmesser der Glasfasern ungefähr 0,1 mm beträgt.

**7.** Zusammensetzung nach Anspruch 2, wobei die Keramikfasern eine Länge von 0,05 mm bis 0,5 mm haben, ferner einen Durchmesser von 0,01 mm bis 0,05 mm und ein Längen-zu-Durchmesser-Verhältnis von 2 bis 15.

**8.** Zusammensetzung nach Anspruch 7, wobei die Länge der Keramikfasern ungefähr 0,14 mm beträgt und der Durchmesser der Keramikfasern ungefähr 0,025 mm ist.

**9.** Eine abriebbeständige Polyurethanelastomerzusammensetzung, die folgendes aufweist:
ein Polyurethanelastomer abgeleitet von einem gesättigten endständige Hydroxylgruppen aufweisenden polyfunktionellen Polyol, einen polyfunktionellen Kettenverlängerer und ein polyfunktionelles Isocyanat; und eine Vielzahl von Fasern verteilt innerhalb des Polyurethanelastomers, wobei die Fasern eine Länge von 0,5 mm bis 3 mm und einen Durchmesser von 0,01 mm bis 0,3 mm besitzen und von 1 Gew.% bis nicht mehr als 10 Gew.% der Polyurethanelastomerzzuammensetung ausmachen; wobei ferner die Polyurethanelastomerzusammensetzung ein Abriebwiderstand von 25 bis 50 % größer als den Abriebwiderstand der Polyurethanelastomerzusammensetzung ohne die Fasern aufweist und eine Bruchdehnung, die mindestens 60 % der Bruchdehnung der Polyurethanelastomerzusammensetzung ohne die Fasern ist.

**10.** Zusammensetzung nach Anspruch 9, wobei die Fasern mindestens eine der folgenden aufweisen: Keramikfasern, Glasfasern, Aramidfasern und Kohlenstoffasern.

**11.** Zusammensetzung nach Anspruch 9, wobei die Fasern eine Mischung aus Glasfasern und Keramikfasern sind.

**12.** Zusammensetzung nach Anspruch 11, wobei die Mischung aus Glasfasern und Keramikfasern in einem Gewichtsverhältnis von 25:75 bis 75:25 der Glasfasern zu Keramikfasern vorhanden ist.

**13.** Zusammensetzung nach Anspruch 12, wobei die Glasfasern und die Keramikfasern in einem Gewichtsverhältnis von 50:50 vorhanden sind.

**14.** Zusammensetzung nach einem der Ansprüche 10 bis 13, wobei die Länge der Glasfasern ungefähr 1,5 mm und der Durchmesser der Glasfasern ungefähr 0,1 mm beträgt.

**15.** Zusammensetzung nach einem der Ansprüche 10 bis 14, wobei die Keramikfasern eine Länge von 0,05 mm bis 0,5 mm besitzen, einen Durchmesser von 0,1 mm bis 0,05 mm und ein Länge-zu-Durchmesserverhältnis von 2 bis 15.

**16.** Zusammensetzung nach Anspruch 15, wobei die Länge der Keramikfasern ungefähr 0,14 mm beträgt und der Durchmesser der Keramikfasern ungefähr 0,025 mm ist.

**Revendications**

**1.** Composé polymère élastomère résistant à l'usure comprenant : une matrice de polymère élastomère ; et une pluralité de fibres dispersées dans la matrice de polymère élastomère et constituant de 1 % à pas plus de 10% en poids du composé polymère élastomère le composé polymère élastomère ayant une résistance à l'usure de 25 à 50 % supérieure à la résistance à l'usure de la matrice de polymère élastomère sans les fibres et un allongement à la rupture d'au moins 60 % de l'allongement à la rupture de la matrice de polymère élastomère sans les fibres ; caractérisé en ce que les fibres sont un mélange de fibres de verre et de fibres de céramique, les fibres de verre ayant une longueur de 0,5 à 3 mm et un diamètre de 0,01 à 0,3 ; et les fibres de céramique ayant une longueur de 0,05 à 3 mm et un diamètre de 0,01 à 0,3 mm.

**2.** Composé selon la revendication 1, comprenant en outre des fibres aramides.

**3.** Composé selon la revendication 1 ou 2, comprenant en outre des fibres de carbone.

**4.** Composé selon l'une quelconque des revendications précédentes, dans lequel le mélange de fibres de verre et de fibres de céramique est présent dans un rapport pondéral compris entre 25/75 et 75/25 de fibres de verre à fibres de céramique.

**5.** Composé selon la revendication 4, dans lequel les fibres de verre et les fibres de céramique sont présentes dans un rapport pondéral d'environ 50/50.

**6.** Composé selon l'une quelconque des revendications précédentes, dans lequel la longueur des fibres de verre est d'environ 1,5 mm et le diamètre des fibres de verre d'environ 0,1 mm.

**7.** Composé selon la revendication 2, dans lequel les fibres de céramique ont une longueur comprise entre 0,05 et 0,5 mm ; un diamètre compris entre 0,01 et 0,05 mm ; et un rapport longueur sur diamètre compris entre 2 et 15.

**8.** Composé selon la revendication 7, dans lequel la longueur des fibres de céramique est d'environ 0,14 mm et le diamètre des fibres de céramique est d'environ 0,025 mm.

**9.** Composé élastomère de polyuréthanne résistant à l'usure comprenant : un élastomère de polyuréthanne dérivé d'un polyol polyfonctionnel à terminaison d'hydroxyle saturé, un extenseur de chaîne polyfonctionnel, et un isocyanate polyfonctionnel ; et une pluralité de fibres dispersées dans l'élastomère de polyuréthanne, les fibres ayant une longueur comprise entre 0,5 et 3 mm et un diamètre compris entre 0,01 et 0,3 mm, et constituant de 1 % à pas plus de 10 % en poids du composé élastomère de polyuréthanne ; le composé élastomère de polyuréthanne ayant une résistance à l'usure comprise entre 25 à 50 % de plus que la résistance à l'usure du composé élastomère de polyuréthanne sans les fibres et un allongement à la rupture qui est au moins 60 % de l'allongement à la rupture du composé élastomère de polyuréthanne sans les fibres.

**10.** Composé selon la revendication 9, dans lequel les fibres comprennent au moins l'une des fibres de céramique, fibres de verre, fibres aramides et fibres de carbone.

**11.** Composé selon la revendication 9, dans lequel les fibres sont un mélange de fibres de verre et de fibres de céramique.

**12.** Composé selon la revendication 11, dans lequel le mélange de fibres de verre et de fibres de céramique est présent dans un rapport pondéral compris entre 25/75 et 75/25 de fibres de verre à fibres de céramique.

**13.** Composé selon la revendication 12, dans lequel les fibres de verre et les fibres de céramique sont présentes dans un rapport pondéral d'environ 50/50.

**14.** Composé selon l'une quelconque des revendications 10 à 13, dans lequel la longueur des fibres de verre est d'environ 1,5 mm et le diamètre des fibres de verre est d'environ 0,1mm.

**15.** Composé selon l'une quelconque des revendications 10 à 14, dans lequel les fibres de céramique ont une longueur comprise entre 0,05 et 0,5 mm, un diamètre compris entre 0,1 et 0,05 mm et un rapport longueur sur diamètre compris entre 2 et 15.

**16.** Composé selon la revendication 15, dans lequel la longueur des fibres de céramique est d'environ 0,14 mm et le diamètre des fibres de céramique est d'environ 0,025 mm.

# FIG. 1

Graph: AVERAGE INTERFACE TEMPERATURE (DEG C) versus PRESSURE (PSI), with two data series: WITH FIBERS and WITHOUT FIBERS.

# *FIG. 2*

## FIG. 3